(19) Europäisches Patentamt

European Patent Office

Office européen des brevets

(11) Veröffentlichungsnummer : **0 379 860 B1**

(12) **EUROPÄISCHE PATENTSCHRIFT**

(45) Veröffentlichungstag der Patentschrift :
**03.06.92 Patentblatt 92/23**

(21) Anmeldenummer : **90100092.7**

(22) Anmeldetag : **03.01.90**

(51) Int. Cl.⁵ : **F16L 3/22**

(54) **Halteelement aus Kunststoff.**

(30) Priorität : **27.01.89 DE 3902499**

(43) Veröffentlichungstag der Anmeldung :
**01.08.90 Patentblatt 90/31**

(45) Bekanntmachung des Hinweises auf die
Patenterteilung :
**03.06.92 Patentblatt 92/23**

(84) Benannte Vertragsstaaten :
**ES GB SE**

(56) Entgegenhaltungen :
**EP-A- 0 230 553**
**DE-U- 8 529 669**
**FR-A- 2 596 489**
**US-A- 4 347 998**

(73) Patentinhaber : **TRW UNITED-CARR GMBH &
CO. KG
Am Pulverhäuschen 7
W-6753 Enkenbach-Alsenborn 1 (DE)**

(72) Erfinder : **Kraus, Willibald
Industriestrasse 6
W-6718 Grünstadt (DE)**

(74) Vertreter : **Schieschke, Klaus, Dipl.-Ing. et al
Patentanwälte Dipl.-Ing. E. Eder Dipl.-Ing. K.
Schieschke Elisabethstrasse 34
W-8000 München 40 (DE)**

**Beschreibung**

Die Erfindung bezieht sich auf ein Halteelement aus Kunststoff mit einem an einem Träger zu befestigenden Unterteil, einem darin eingesetzten Zwischenteil und einem mit dem Unterteil verbundenen Oberteil, wobei Unterteil und Oberteil aus härterem Material und das Zwischenteil aus weicherem Material bestehen und das Halteelement mindestens eine Lagerstelle zur Aufnahme eines rohrförmigen Elements aufweist, welche im Zwischenteil angeordnet ist und im montierten Zustand das rohrförmige Element nahezu über den gesamten Umfang umgibt.

Als Stand der Technik ist bereits ein derartiges Halteelement bekannt (EP-A-0230553), welches so ausgebildet ist, daß das Oberteil verlierfest mit einer Schraube versehen ist. Diese Schraube wird in eine Gewindebuchse eingeschraubt, die ihrerseits an einem Träger befestigt ist. Das Unterteil ist hierbei so gestaltet, daß mindestens ein Zwischenelement seitlich eingeschoben wird, wonach nach dem Einschub und nach dem Einführen von Rohren das Oberteil mit der Gewindebuchse verschraubt wird. Hierbei sind die zu halternden Rohre nicht über den gesamten Umfang von dem dämpfenden Zwischenelement umgeben, so daß immer noch unerwünschte Geräuschquellen vorliegen, wobei andererseits durch den seitlichen Einschub des Zwischenelements und durch den Verschraubvorgang zwischen der Schraube und der Gewindebuchse ein relativ hoher kostenmäßiger Aufwand vorliegt. Auch die Montage gestaltet sich aufwendig.

Als Stand der Technik ist weiterhin ein Halteelement bekannt, bei welchem das Unterteil mehrerer, durch Stege untereinander abgeteilte Bereiche aufweist, in welche Drähte eingelagert sind (US-A-4 347 998). Das weichere Mittelteil, welches entsprechend mit Aussparungen versehen ist, beaufschlagt von oben diese Drähte und drückt sie gegen das Unterteil. Die gesamte Anordnung wird von einem aus härterem Material bestehenden Oberteil abgeschlossen, welches beidseitig hakenförmig in Rippen des Unterteils eingreift. Diese so montierte Einheit wird über mehrere Schrauben an einem Träger befestigt.

Es ergibt sich damit eine Konstruktion, welche nicht genügend geräuschgedämpft ist infolge der Lagerung der rohrförmigen Teile in den einzelnen Abschnitten des aus härterem Material bestehenden Unterteils, wobei zum anderen die einzelnen Teile des Halteelements nicht so miteinander verbunden sind, daß bei stärkeren Belastungen diese sich nicht untereinander lösen könnten.

Weiterhin ist als Stand der Technik ein zweiteiliges Halte element bekannt, mit einem zur Aufnahme zweier Rohre geeigneten Unterteil aus Kunststoff, welches im oberen Bereich durch ein klammerartiges, aus Blech bestehendes Oberteil verschlossen wird (GB-PS 1 403 714). Auch hier ist keinerlei Geräuschdämpfung gegeben.

Zum Stand der Technik zählt darüber hinaus ebenfalls ein zweiteiliges Halteteil mit einem rechteckig ausgebildeten äußeren Halteelement, in welchem sich ein inneres Element aus weicherem Material befindet, das Lagerstellen für Rohre bildet (FR-A-2 596 489). Hierbei werden die Rohre jedoch nur jeweils über einen relativ geringen Bereich gehaltert, so daß deren Lagerung bei stärkeren Belastungen nicht immer einwandfrei gewährleistet ist.

Demgegenüber liegt der vorliegenden Erfindung die Aufgabe zugrunde, ein Halteelement nach der eingangs genannten Art so auszubilden, daß unter Berücksichtigung eines geringen Montage- und Kostenaufwandes eine einfache, aber wirkungsvolle Geräuschdämpfung gegeben ist.

Diese Aufgabe wird erfindungsgemäß dadurch gelöst,

daß das Zwischenteil im Bereich der Lagerstellen jeweils eine, im montierten Zuistand das rohrförmige Element überdekkende Zunge besitzt,

daß das Oberteil zwei einander gegenüberliegende, mit dem Unterteil verriegelbare Seitenwände aufweist und

daß das Unterteil über mindestens ein Rastelement direkt an einem am Träger angeordneten Befestigungselement befestigbar ist.

Hierdurch ergibt sich der Vorteil einer sehr wirkungsvollen Geräuschdämpfung, da die geräuscherzeugenden Bereiche der rohrförmigen Teile in dem aus weicherem Material bestehenden Zwischenteil weitestgehend eingelagert sind und in keiner Weise in Berührung mit dem aus härterem Material bestehenden Unterteil bzw. dem Oberteil kommen. Zudem ist durch die Verriegelung zwischen Ober- und Unterteil und die Befestigung des Unterteils am Träger eine kostensparende, montagefreundliche Einheit gegeben.

Vorteilhafte Weiterbildungen ergeben sich aus den Unteransprüchen.

Die Erfindung wird nachfolgend anhand eines in der Zeichnung dargestellten Ausführungsbeispiels näher beschrieben. In der Zeichnung zeigen:

Fig. 1 ein Oberteil im Schnitt

Fig. 2 ein Zwischenteil in Seitenansicht;

Fig. 3 ein Unterteil im Schnitt;

Fig. 4 das Zwischenteil nach Fig. 2 und das Unterteil nach Fig. 3 im vormontierten Zustand mit zwei rohrförmigen Teilen;

Fig. 5 die gesamte montierte Einheit mit Oberteil, Unterteil und Zwischenteil;

Fig. 6 eine Draufsicht auf die komplett montierte Einheit nach Fig. 5.

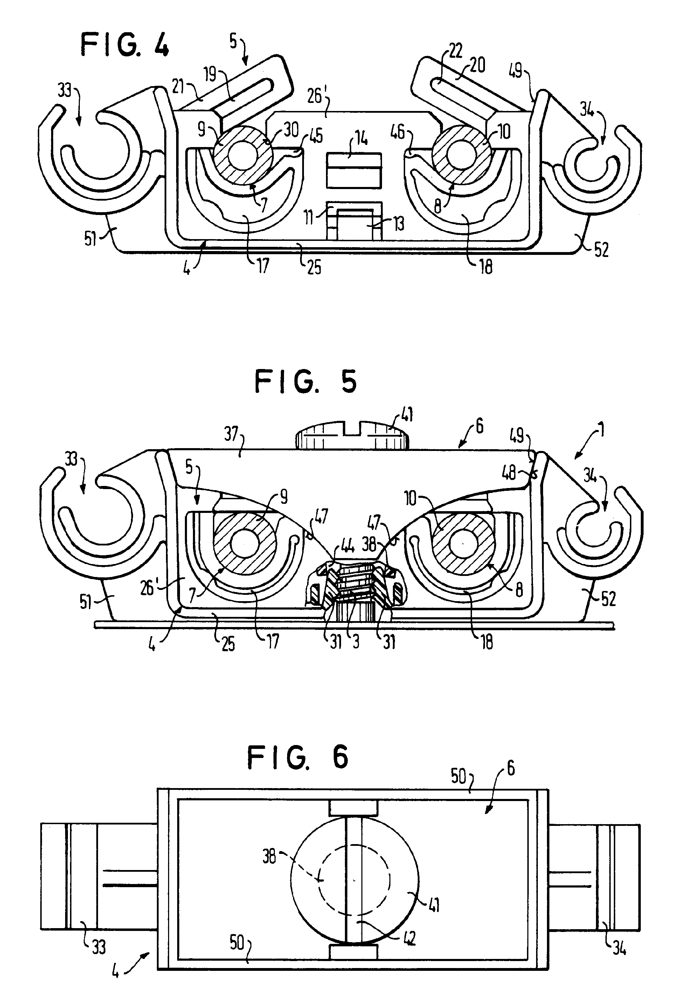

Das erfindungsgemäße, in Fig. 5 im montierten Zustand bestehende Halteelement 1, welches an einem Träger 2 über ein mit Profil versehenes Befestigungselement angebracht ist, besteht im wesentlichen aus einem Unterteil 4, einem Zwischenteil 5 sowie einem Oberteil 6. Hierbei bestehen das Unterteil 4 sowie das Oberteil 6 aus härterem und das Zwischenteil 5 aus weicherem Kunststoffmaterial. Durch die in Fig. 5 dargestellte, komplett montierte Einheit des Halteelements lassen sich rohrförmige Elemente 9 und 10 geräuschgedämpft lagern. Darüber hinaus besteht die Möglichkeit, weitere rohrförmige Elemente in Lagerstellen 33 und 34, welche jeweils aus zwei Lagerschalen bestehen, entsprechend zu haltern.

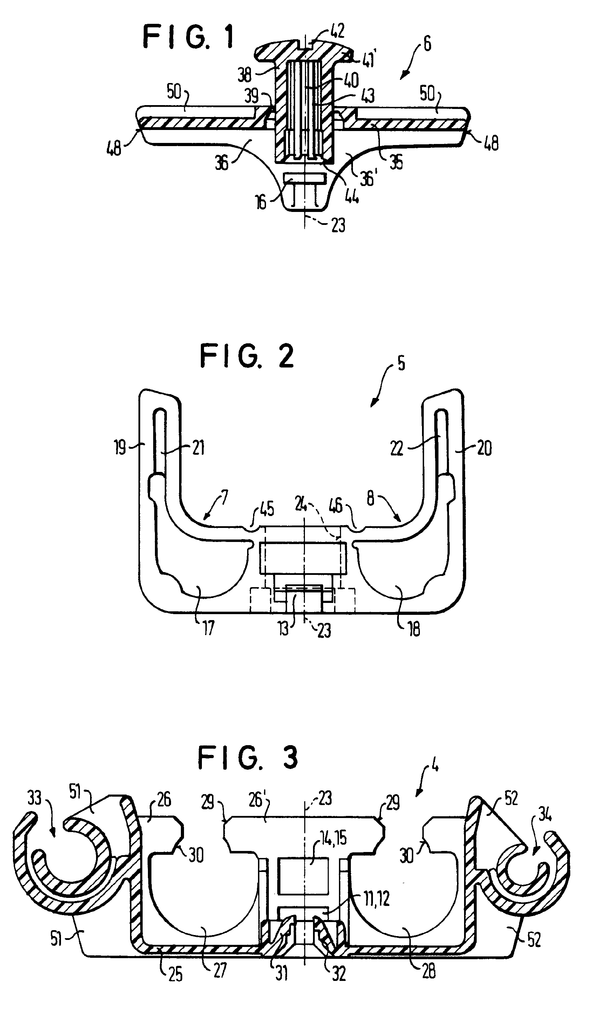

In den Figuren 1, 2 und 3 sind die drei Einzelteile des erfindungsgemäßen Halteelements näher dargestellt. Hierbei besteht gemäß Fig. 1 das Oberteil 6 aus einer Platte 35 und zwei einander gegenüberliegenden Seitenwänden 36 und 37 (Fig. 5). In den beiden Seitenwänden sind Rastnasen 16 angeordnet. Darüber hinaus weist das Oberteil 6 im mittleren Bereich 23 einen durch eine Schwimmhaut 39 mit der Platte 35 verbundenen, mit einem Sackloch 40 versehenen Bolzen 38 auf. Hierbei kann das Sackloch 40 mit entsprechenden Profilierungen 43 und mit einem Kopf 41 mit Werkzeugeingriff 42 versehen sein. Die Platte 35 sowie die Seitenwände 36 und 36' werden durch Abschrägungen 48 begrenzt, wobei die beiden Seitenwände im Bereich der Platte 35 jeweils eine parallel verlaufende Rippe 50 besitzen. Das vordere Ende des Sacklochs 40 geht in einen konischen Bereich 44 über.

In Fig. 2 ist das aus weicherem Kunststoffmaterial bestehende Zwischenteil näher dargestellt. Wie ersichtlich, sind beidseits eines mittleren Bereichs Lagerstellen 7 und 8 vorhanden, unterhalb welcher sich Freiarbeitungen 17 und 18 befinden. Diese Lagerstellen gehen in Zungen 19 und 20 über, welche ebenfalls Freiarbeitungen 21 und 22 aufweisen, welche beispielsweise durch Zwischenwände unterteilt sein können. Im Bereich der Lagerstellen 7 und 8 können sich zwei längsverlaufende Nuten 45 und 46 befinden.

Im mittleren Bereich 23 weist das Zwischenteil 5 gegenüberliegende Rastnasen 13 auf, wobei außerdem im mittleren Bereich eine zylinderförmige Ausnehmung 24 vorgesehen ist. Diese zylinderförmige Ausnehmung 24 geht im unteren Bereich des Zwischenteils 5 in eine größere zylindrische Ausnehmung über.

Das Unterteil 4 ist in Fig. 3 näher dargestellt. Wie ersichtlich, ist es U-förmig ausgebildet mit einem Boden 25 und zwei einander gegenüberliegenden, parallel verlaufenden Seitenwänden 26 und 26' - gemäß Fig. 4. Die beiden parallel verlaufenden Wände 26 und 26' sind jeweils mit Aussparungen 27 und 28 im Bereich der Lagerstellen 7 bzw. 8 des Zwischenteils 5 versehen. Oberhalb der beiden Aussparungen 27 und 28 sind Einlaufschrägen 29 sowie Abschrägungen 30 zur Vormontage für die rohrförmigen Teile 9 und 10 vorgesehen.

Im mittleren Bereich 23 weist das Unterteil 4 zwei einander gegenüberliegende Aussparungen 14 und 15 sowie darunter zwei einander gegenüberliegende Aussparungen 11 und 12 auf. Hierbei dienen die Aussparungen 14 und 15 zur Einlagerung der Rastnasen 16 in den Seitenwänden 36 und 37 des Oberteils 6; die darunterliegenden Aussparungen 11 und 12 dienen zur Einlagerung der in dem Zwischenteil 5 angeordneten Rastnasen 13. Darüber hinaus ist der mittlere Bereich, anschließend an den Boden 25 mit einem Bund ausgestattet, welcher sich in die entsprechende zylindrische Aussparung des Zwischenteils 5 einlagert. Im Bereich dieses Bundes befinden sich zur Durchführung einer Vormontage mindestens zwei einander gegenüberliegende, mit Abstufungen 32 versehene, federnde Zungen 31, welche als Rastelement dienen.

Wie bereits ausgeführt, kann das Unterteil 4 mit weiteren Lagerstellen 33 und 34 versehen sein, welche an dem U-förmigen Teil angeformt und durch Stege 51 und 52 stabilisiert sind.

In Fig. 4 ist die Vormontage durch Zusammenfügung des Unterteils 4 mit dem Zwischenteil 5 näher dargestellt. Wie ersichtlich, wurden hier bereits zwei rohrförmige Teile 9 und 10 in die Lagerstellen 7 und 8 des Zwischenteils 5 eingebracht. Diese rohrförmigen Teile 9 und 10 stützen sich gegen die Abschrägungen 30 der Aussparungen 27 und 28 ab und werden federnd gegen diese gedrückt durch Wirkung der oberhalb der Freiarbeitungen 17 und 18 liegenden Bereiche des aus weicherem Material bestehenden Zwischenteils 5. Hierbei haben sich die Zungen 19 und 20 bereits teilweise über den Umfang der rohrförmigen Teile 9 und 10 gelegt, so daß sich insgesamt eine vormontierte Einheit, bestehend aus Unterteil 4 und Zwischenteil 5 ergibt und hierbei das Zwischenteil 5 mit seinen einander gegenüberliegenden Rastnasen 13 in die entsprechenden Aussparungen 11 und 12 im mittleren Bereich 23 der Seitenwände 26 und 26' des Unterteils 4 eingerastet sind.

Diese nach Fig. 4 vormontierte Einheit läßt sich nun auf ein, beispielsweise mit Profilen versehenes Befestigungselement 3 eines Trägers 2 drücken, wobei die federnden Zungen 31 mit ihren Abstufungen 32 im mittleren Bereich des Unterteils 4 sich an den Außenumfang des profilierten Befestigungselements 3 legen.

Nach dieser weiteren Stufe der Vormontage wird das Oberteil 6 aufgebracht und von oben auf das Zwischenteil 5 und das Unterteil 4 aufgesetzt. Hierbei verrasten die Rastnasen 16 in den Seitenwänden 36 und 37 des Oberteils 6 in den entsprechenden Aussparungen 14 bzw. 15 im mittleren Bereich 23 der Seitenwände 36 und 37 des Unterteils 4.

Nach dieser Verrastung wird ein Schlag auf den Kopf 41 des Bolzens 38 im Oberteil 6 aufgebracht, wobei sich das Sackloch 40 des Bolzens 38 in dem entsprechenden Profil des Befestigungselements 3 einlagert. Nach Durchführung dieser Montage ist, wie aus Fig. 5 ersichtlich, der vordere Bereich 44 über den oberen Teil der federnden Zungen 31 übergestülpt und drückt diese gegen das Profil des Befestigungselements 3.

Es ergibt sich damit eine Endmontage, wie in Fig. 5 dargestellt: die rohrförmigen Elemente 9 und 10 sind in Lagerstellen 7 und 8 gelagert, welche durch das aus weicherem Material bestehende Zwischenteil 5 gebildet sind. Sie werden fast vollständig von diesem Zwischenelement 7 umgeben und erfahren damit eine sehr gute Geräuschdämpfung, weil sie in keiner Weise mit dem aus härterem Material bestehenden Oberteil 6 bzw. dem Unterteil 4 in Berührung kommen. Hierbei sind die Seitenwände 36 und 37 des Oberteils 6 vorzugsweise mit jeweils einer Kurvenform 47 ausgebildet, um nicht mit einem entsprechenden Bereich des rohrförmigen Bereichs 9 bzw. 10 in Berührung zu kommen.

Durch die Anlage des vorderen Bereichs 44 des Sackloches 40 im Bolzen 38 werden die federnden Zungen stark gegen die Profilierung des Befestigungsteils 3 gedrückt, so daß die gesamte Einheit insgesamt funktionssicher an dem Träger 2 befestigt ist.

Alternativ besteht auch die Möglichkeit, Unterteil 4 mit Zwischenelement 5 auf einem z.B. nach unten gerichteten Träger (Karosserie) vorzumontieren und danach Leitungen einzudrücken, welche sich in die Lagerstellen 7, 8 einlagern und durch die Ab schrägungen 30 (Fig. 3) in dieser Lage bis zur endgültigen Montage gehalten werden.

Nach Fig. 5 und 6 besteht nun die Möglichkeit, zur Demontage ein Werkzeug, beispielsweise einen Schraubdreher, in den Werkzeugeinsatz 42 des Kopfes 41 des Bolzens 38 einzusetzen und diesen zu drehen, wodurch ein Abschrauben der Einheit erfolgt.

Das Halteelement 1, bestehend aus dem Unterteil 4, dem Zwischenteil 5 und dem Oberteil 6 haltert rohrförmige Elemente 9 und 10, welche auch unterschiedlichen Durchmessers sein können, in sehr guter Weise geräuschgedämpft, wobei die gesamte Anordnung zuverlässig an einem Träger befestigt ist. Dieses Halteelement ist daher insbesondere auf dem Gebiet der Kraftfahrzeugtechnik anwendbar, wo einerseits eine sehr gute Geräuschdämpfung, jedoch andererseits eine sehr gute Haltewirkung erreicht werden soll. Da das Zwischenteil 5 und das Oberteil 6 jeweils über Rastnasen in entsprechende Aussparungen des Unterteils 4 eingreifen, sind diese Teile optimal gegeneinander gesichert. Aus Fig. 5 geht hierbei hervor, daß die Endbereiche 48 des Oberteils 6 an einer umlaufenden Rippe 49 des Unterteils 4 anliegen, so daß das Oberteil 6 gesichert und abgestützt an dem Unterteil 4 befestigt ist.

## Patentansprüche

1. Halteelement aus Kunststoff mit einem an einen Träger zu befestigenden Unterteil (4), einem darin eingesetzten Zwischenteil (5) und einem mit dem Unterteil (4) verbundenen Oberteil (6), wobei Unterteil (4) und Oberteil (6) aus härterem Material und das Zwischenteil (5) aus weicherem Material bestehen und das Halteelement mindestens eine Lagerstelle zur Aufnahme eines rohrförmigen Elements (7, 8) aufweist, welche im Zwischenteil (5) angeordnet ist und im montierten Zustand das rohrförmige Element (9, 10) nahezu über den gesamten Umfang umgibt, dadurch gekennzeichnet, daß das Zwischenteil (5) im Bereich der Lagerstellen (7, 8) jeweils eine, im montierten Zustand das rohrförmige Element (9, 10) überdeckende Zunge (19, 20) besitzt, daß das Oberteil (6) zwei einander gegenüberliegende, mit dem Unterteil (4) verriegelbare Seitenwände (36, 37) aufweist und daß das Unterteil (4) über mindestens ein Rastelement direkt an einem am Träger (2) angeordneten Befestigungselement befestigbar ist.

2. Halteelement nach Anspruch 1, dadurch gekennzeichnet, daß die im Bereich der Lagerstelle (7, 8) des Zwischenteils (5) geschwungenen Seitenwände (36, 37) des Oberteils (6) Rastnasen (16) aufweisen, welche in Aussparungen (14, 15) des Unterteils (4) einlagerbar sind.

3. Halteelement nach Anspruch 1 und 2, dadurch gekennzeichnet, daß der Boden (25) des Unterteils (4) im mittleren Bereich (23) das Rastelement aufweist.

4. Halteelement nach Anspruch 3, dadurch gekennzeichnet, daß das Rastelement aus mindestens zwei, einander gegenüberliegenden, mit Abstufungen (32) versehenen federnden Zungen (31) besteht.

5. Halteelement nach Anspruch 1 bis 3, dadurch gekennzeichnet, daß das Unterteil (4) neben jeweils einer durch das Zwischenteil (5) gebildeten Lagerstelle (7, 8) mindestens eine weitere Lagerstelle (33, 34) für rohrförmige Elemente aufweist.

6. Halteelement nach einem der vorhergehenden Ansprüche, dadurch gekennzeichnet, daß das Zwischenelement (5) beidseitig eines mittleren Bereichs (23), in welchem in Aussparungen (11, 12) des Unterteils (4) einsetzbare Rastnasen (13) und eine zylindrische Aussparung (24) angeordnet sind, mindestens eine der Lagerstellen (7, 8) aufweist.

7. Halteelement nach Anspruch 6, dadurch gekennzeichnet, daß die Lagerstellen (7, 8) des Zwischenelements (5) jeweils mindestens eine den Zungen (19, 20) gegenüberliegende Nut (45, 46) aufweist.

8. Halteelement nach Anspruch 7, dadurch gekennzeichnet, daß die Lagerstellen (7, 8) zur Aufnahme von rohrförmigen Elementen (9, 10) unterschiedlichen Durchmessers ausgebildet sind.

9. Halteelement nach Anspruch 1, dadurch gekennzeichnet, daß das Oberteil (6) im mittleren Bereich (23) einen durch eine Schwimmhaut (39) mit der Platte (35) verbundenen, mit einem Sackloch (40) versehenen Bolzen (38) aufweist, welcher nach der Montage in die zylindrische Aussparung (24) des Zwischenteils (5) eingelagert ist.

10. Halteelement nach Anspruch 9, dadurch gekennzeichnet, daß der Bolzen (38) im montierten Zustand mit seinem vorderen Bereich (44) den Außenumfang der Zungen (31) des Unterteils (4) beaufschlagt und diese gegen das Befestigungselement (3) des Trägers (2) drückt.

11. Halteelement nach Anspruch 10, dadurch gekennzeichnet, daß der Bolzen (38) einen kopf (41) mit Werkzeugeingriff (42) und ein mit Profilierung (43) versehenes Sackloch (40) aufweist.

## Claims

1. Fixing element made of plastic having a bottom part (4), which is to be attached to a support, an intermediate part (5), which is inserted in said bottom part, and a top part (6) which is connected to the bottom part (4), the bottom part (4) and top part (6) consisting of harder material and the intermediate part (5) of softer material and the fixing element having at least one bearing point for retaining a tubular element (7, 8), which bearing point is arranged in the intermediate part (5) and, in the assembled state, surrounds the tubular element (9, 10) virtually over the entire circumference, characterised in that, in the region of the bearing points (7, 8), the intermediate part (5) has in each case a tongue (19, 20) which covers the tubular element (9, 10) in the assembled state, in that the top part (6) has two side walls (36, 37) which are located opposite each other and can be interlocked with the bottom part (4), and in that the bottom part (4) can be attached directly to an attachment element arranged on the support (2) via at least one catch element.

2. Fixing element according to Claim 1, characterised in that the side walls (36, 37) of the top part (6), which are curved in the region of the bearing point (7, 8) of the intermediate part (5), have catch projections (16) which can be mounted in cutouts (14, 15) of the bottom part (4).

3. Fixing element according to Claims 1 and 2, characterised in that the base (25) of the bottom part (4) has the catch element in the central region (23).

4. Fixing element according to Claim 3, characterised in that the catch element consists of at least two spring tongues (31) which are located opposite one another and are provided with steps (32).

5. Fixing element according to Claims 1 to 3, characterised in that, in addition to one bearing point (7, 8) formed in each case by the intermediate part (5), the bottom part (4) has at least one further bearing point (33, 34) for tubular elements.

6. Fixing element according to one of the preceding claims, characterised in that the intermediate element (5) has at least one of the bearing points (7, 8) on both sides of a central region (23), in which catch projections (13), which can be inserted in cutouts (11, 12) in the bottom part (4), and a cylindrical cutout (24) are arranged.

7. Fixing element according to Claim 6, characterised in that the bearing points (7, 8) of the intermediate element (5) each have at least one groove (45, 46) located opposite the tongues (19, 20).

8. Fixing element according to Claim 7, characterised in that the bearing points (7, 8) are constructed to retain tubular elements (9, 10) of different diameters.

9. Fixing element according to Claim 1, characterised in that, in the central region (23), the top part (6) has a bolt (38) which is connected to the plate (35) by a flash (39), is provided with a blind hole (40) and is deposited after assembly in the cylindrical cutout (24) in the intermediate part (5).

10. Fixing element according to Claim 9, characterised in that, in the assembled state, the bolt (38) bears with its front region (44) on the external circumference of the tongues (31) of the bottom part (4) and presses said tongues against the attachment element (3) of the support (2).

11. Fixing element according to Claim 10, characterised in that the bolt (38) has a head (41) with a tool engagement (42) and a blind hole (40) provided with a profile (43).

## Revendications

1. Elément de fixation en plastique comportant une partie inférieure (4) à fixer sur un support, une partie intermédiaire (5) à y intercaler et une partie supérieure (6) raccordée à la partie inférieure (4) ; la partie inférieure (4) et la partie supérieure (6) consistant en un matériau plus dur et la partie intermédiaire (5) en un matériau plus mou et l'élément de fixation présente au moins une zone d'appui pour la réception d'un élément tubulaire (7, 8), laquelle est agencée dans une partie intermédiaire (5) et entoure à l'état monté l'élément tubulaire (9, 10) pratiquement sur la totalité de sa périphérie, élément de fixation caractérisé en ce que la partie intermédiaire (5) possède au niveau des zones d'appui (7, 8) respectivement une languette (19, 20) recouvrant à l'état monté l'élément tubulaire (9, 10), en ce que la partie supérieure présente deux parois latérales (36, 37) verrouillables avec la partie inférieure (4) et situées en opposition l'une de l'autre et en ce que la partie inférieure (4) peut être fixée par l'intermédiaire d'au moins un élément d'engagement directement sur un élément de fixation disposé sur le support (2).

2. Elément de fixation selon la revendication 1, caractérisé en ce que les parois latérales (36, 37) de la partie supérieure, incurvées au niveau de la zone d'appui (7, 8) de la partie intermédiaire (5) présentent des talons d'engagement (16) qui peuvent être logés dans les évidements (14, 15) de la partie inférieure (4).

3. Elément de fixation selon les revendications 1 et 2, caractérisé en ce que le fond (25) de la partie inférieure (4) comporte un élément d'engagement dans sa zone médiane (23).

4. Elément de fixation selon la revendication 3, caractérisé en ce que l'élément de fixation est constitué par au moins deux languettes (31) élastiques munies de gradins (32), situées en regard l'une de l'autre.

5. Elément de fixation selon la revendication 1 à 3, caractérisé en ce que la partie inférieure (4) présente en plus des zones d'appui respectives (7, 8) formées par la partie intermédiaire (5) au moins une zone d'appui supplémentaire (33, 34) pour les éléments tubulaires.

6. Elément de fixation selon l'une des revendications précédentes, caractérisé en ce que l'élément intermédiaire (5) comporte des deux côtés d'une zone médiane (23) dans laquelle sont agencés dans des évidements (11, 12) de la partie inférieure (4) des talons d'engagement insérables (13) et un évidement cylindrique (24), au moins une des zones d'appui (7, 8).

7. Elément de fixation selon la revendication 6, caractérisé en ce que les zones d'appui (7, 8) de l'élément intermédiaire (5) présentent respectivement au moins une gorge (45, 46) en opposition aux languettes (19, 20).

8. Elément de fixation selon la revendication 7, caractérisé en ce que les zones d'appui (7, 8) destinées à la réception d'éléments tubulaires (9, 10) sont formées avec des diamètres différents.

9. Elément de fixation selon la revendication 1, caractérisé en ce que la partie supérieure (6) dans la zone médiane (23) comporte un axe (38) muni d'un trou borgne (40), relié par une bavure (39) à la plaque (35), axe qui après le montage peut être logé dans l'évidement cylindrique (24) de la partie intermédiaire (5).

10. Elément de fixation selon la revendication 9, caractérisé en ce que l'axe (38) à l'état monté sollicite par sa zone antérieure (44) la périphérie extérieure des languettes (31) de la partie inférieure (4) et celles-ci viennent s'appuyer contre l'élément de fixation (3) du support (2).

11. Elément de fixation selon la revendication 10, caractérisé en ce que l'axe (38) présente une tête (41) munie d'un engagement pour outil (42) et d'un trou borgne (40) prévu avec le profilé (43).

# F I G. 1

# F I G. 2

# F I G. 3

# FIG. 4

# FIG. 5

# FIG. 6